# EUROPÄISCHE PATENTANMELDUNG

(11) **EP 1 221 803 A1**
(43) Veröffentlichungstag der Anmeldung: **10.07.2002**
(21) Anmeldenummer: 01120887.3
(22) Anmeldetag: 30.08.2001
(51) Int. Cl.: H04M 3/533, H04Q 7/22, H04Q 7/38, H04M 3/42

(54) **Koordinationsdienst für Short Message Service**

(71) Anmelder: SIEMENS AKTIENGESELLSCHAFT, 80333 München (DE)
(72) Erfinder: Mitreuter, Ulrich, Dr., 82549 Koenigsdorf (DE); Zygan-Maus, Renate, Dr., 81477 München (DE)

(57) **Zusammenfassung**

Der Short Message Service - Kurznachrichtendienst - ermöglicht es, zwischen zwei Endgeräten kurze Nachrichten auszutauschen, ohne daß dazu ein Ruf aufgebaut werden muß. Eine Übermittlung Kurznachrichten an Teilnehmer eines sogenannten One Number Dienstes - dabei handelt es sich um einen Dienst, bei dem ein Festnetzendgerät und ein zugeordnetes mobiles Endgerät unter der gleichen Festnetzrufnummer erreichbar sind - und Festnetzteilnehmer ist noch nicht möglich, eine Erweiterung des Dienstes auf das Festnetz ist jedoch in Vorbereitung. Es soll dann mithilfe spezieller, neuer Festnetzendgeräte möglich sein, Kurznachrichten zu empfangen und zu versenden. An einem solchen neuen Festnetzendgerät muß zumindest eine Anzeigevorrichtung, eine Empfangseinrichtung, eine Speichereinrichtung und eine Sendeeinrichtung für Kurznachrichten vorhanden sein. Ein Problem besteht darin, einen Koordinationsdienst für die Zustellung von Kurznachrichten auch an Teilnehmer anzubieten, die nicht über ein entsprechendes Festnetzendgerät verfügen. Erfindungsgemäß wird dies durch einen Koordinationsdienst, der die Weiterleitung der für eine Festnetzadresse erhaltenen Kurznachrichten an andere Kommunikationsmittel des Adressaten vornimmt und zu diesem Zweck in einem Koordinationsserver Informationen über die anderen Kommunikationsmittel des Adressaten vorhält.

## Beschreibung

Der Short Message Service - Kurzmitteilungsdienst - ist ein sehr erfolgreicher Mobilfunkdienst. Durch den Short Message Service ist es möglich, zwischen zwei Endgeräten kurze Nachrichten mit einer Länge von bis zu 160 alphanumerischen Zeichen auszutauschen, ohne daß dazu ein Ruf aufgebaut werden muß.

Mit mobilen Endgeräten, die zur Teilnahme an einem sogenannten One Number Dienst - dabei handelt es sich um einen Dienst, bei dem ein Festnetzendgerät und ein zugeordnetes mobiles Endgerät unter der gleichen Festnetzrufnummer erreichbar sind - vorgesehen sind, ist jedoch der Empfang einer Nachricht des Short Message Service nicht möglich, da die Adressierung des mobilen Endgerätes über die Festnetzrufnummer erfolgt und derzeit noch keine Übermittlung von Nachrichten des Short Message Service an Festnetzrufnummern möglich ist. Gleichermaßen ist eine Übermittlung von Nachrichten des Short Message Service an Festnetzendgeräte ebenfalls noch nicht möglich.

Eine Erweiterung des Short Message Service auf das Festnetz ist in Vorbereitung. Es soll dann mithilfe spezieller, neuer Festnetzendgeräte möglich sein, Nachrichten des Short Message Service auch mit diesen Festnetzendgeräten zu empfangen und zu anderen Festnetzendgeräten oder zu mobilen Endgeräten zu versenden. An einem solchen neuen Festnetzendgerät muß zumindest eine Anzeigevorrichtung, eine Empfangseinrichtung, eine Speichereinrichtung und eine Sendeeinrichtung für Nachrichten des Short Message Service vorhanden sein.

Mit der Einführung des Short Message Service für das Festnetz besteht ein Problem darin, einen Koordinationsdienst für die Zustellung von Nachrichten des Short Message Service auch an Teilnehmer, die nicht über ein spezielles, neues Festnetzendgerät zum Empfang von Nachrichten des Short Message Service verfügen, anzubieten.

Ein solcher Koordinationsdienst ist nicht bekannt.

Die der vorliegenden Erfindung zugrundeliegende Aufgabe besteht darin, einen Koordinationsdienst für den Short Message Service anzugeben.

Diese Aufgabe wird durch die Merkmale des Patentanspruchs 1 gelöst.

Ein wesentlicher Vorteil des erfindungsgemäßen Verfahrens besteht darin, daß es einem Festnetzteilnehmer, der nicht über ein Festnetzendgerät mit Mitteln zum Empfang von Nachrichten des Short Message Service verfügt, ermöglicht wird, an das Festnetzendgerät adressierte Nachrichten des Short Message Service an ein anderes, mit Mitteln zum Empfang von Nachrichten des Short Message Service ausgestattetes Kommunikationsmittel umzuleiten und auf diese Weise zu empfangen. In gleicher Weise können auch Teilnehmer eines One Number Dienstes Nachrichten des Short Message Service auf ein entsprechend ausgestattetes Kommunikationsmittel umleiten und auf diese Weise zu empfangen.

Vorteilhaft wird ein Koordinationsserver vorgesehen, der die erforderlichen Angaben des Festnetzteilnehmers speichert, beispielsweise Festnetzrufnummer, Fähigkeiten des Festnetzendgerätes, Mobilfunkrufnummer, Mailboxrufnummer eines Unified Messaging Systems, Datennetzadresse. Dann kann die Weiterleitung Nachrichten des Short Message Service entsprechend der im Koordinationsserver vorhandenen, durch den Festnetzteilnehmer und/oder durch den Betreiber des Koordinationsservers veränderbaren Informationen an eines oder mehrere weitere Kommunikationsmittel des Festnetzteilnehmers weitergeleitet werden, beispielsweise an ein Mobiltelefon oder ein Datennetzendgerät oder eine Mailbox eines Unified Messaging Systems.

Weitere vorteilhafte Ausgestaltungen der Erfindung sind den Unteransprüchen zu entnehmen.

Im folgenden wird das erfindungsgemäße Verfahren anhand eines Ausführungsbeispiels näher erläutert.

Ein Koordinationsserver für den Short Message Service, der sich im Netz eines Telefon-Netzbetreibers befindet, im folgenden als SMS Koordinationsserver bezeichnet, arbeitet in diesem Netz als Short Message Service Gateway. Dazu muß er Teil des CCS7 Signalisierungsnetzwerkes (Common Channel Signaling System 7) des Netzbetreibers sein. Zusätzlich besitzt der SMS Koordinationsserver eine Schnittstelle zu einem öffentlichen Datennetz, z.B. dem Internet.

Durch den SMS Koordinationsserver werden Dienst-Profile für Nutzer des Dienstes "SMS Koordinationsdienst" gespeichert. Diese Dienst-Profile enthalten beispielsweise die folgenden Informationen:
- die Festnetzrufnummer eines Dienstenutzers,
- Angaben darüber, ob das Festnetzendgerät mit Mitteln zum Empfang von Nachrichten des Short Message Service ausgestattet ist,
- die Mobilfunkrufnummer des Nutzers, falls der Nutzer Teilnehmer eines One Number Dienstes ist,
- Angaben über ein Datenendgerät des Dienstenutzers, z.B. die Internet-Adresse sowie Angaben darüber, ob Nachrichten des Short Message Service an dieses Datenendgerät weitergeleitet werden sollen,
- die Adresse der Mailbox des Dienstenutzers in einem Unified Messaging System.

Das Routing der Nachrichten des Short Message Service im Signalisierungsnetzwerk muß so erfolgen, daß eine Nachricht des Short Message Service den SMS Koordinationsserver erreicht, der das Dienst-Profil des Nutzers verwaltet, an den die Nachricht des Short Message Service adressiert ist.

Der SMS Koordinationsserver analysiert das Dienst-Profil des adressierten Dienstenutzers und stellt dem Dienstenutzer den Inhalt der Nachricht des Short Message Service in Abhängigkeit des zur Verfügung stehenden Kommunikationswegs zu:
- Besitzt der Dienstenutzer ein Festnetzendgerät, mit dem Nachrichten des Short Message Service gesendet und empfangen werden können, leitet der SMS Koordinationsserver die Nachricht des Short Message Service an ein SMS Center des Netzwerkes weiter, welches die Zustellung der Nachricht des Short Message Service an den Dienstenutzer übernimmt. Der Dienstenutzer liest die SMS an seinem Festnetzendgerät und kann eine SMS zurücksenden. Beim Senden einer Nachricht des Short Message Service von einem Festnetzendgerät an ein Mobiltelefon wird der SMS Koordinationsserver nicht benötigt. Wird eine Nachricht des Short Message Service zwischen zwei Festnetzendgeräten ausgetauscht, koordiniert der SMS Koordinationsserver die Zustellung in der gleichen Weise wie oben beschrieben.
- Ist der Dienstenutzer Teilnehmer eines One Number Dienstes, dann leitet der SMS Koordinationsserver die Nachricht des Short Message Service an das SMS Center des Mobilfunknetzes weiter, zu dem das Mobiltelefon des Dienstenutzers gehört. Das SMS Center leitet die Nachricht des Short Message Service an das Mobiltelefon weiter.
- Ist der Dienstenutzer mit dem Internet verbunden, so nutzt der SMS Koordinationsserver die dem Netz durch einen Registrierungsvorgang des Datenendgerätes bekannte Internet-Adresse des Dienstenutzers, um ihm die Nachricht des Short Message Service über das Datennetz an sein Datenendgerät zu senden. Der Dienstenutzer kann dann die Nachricht des Short Message Service am Datenendgerät lesen und beispielsweise ebenfalls mit einer Nachricht des Short Message Service beantworten. Der SMS Koordinationsserver übernimmt dann die Weiterleitung der Nachricht des Short Message Service an das adressierte Netz, z.B. das Mobilfunknetz oder das Festnetz.
- Besitzt der Dienstenutzer eine Mailbox in einem Unified Messaging System, dann wird die Nachricht des Short Message Service an das Unified Messaging System weitergeleitet. Dem Dienstenutzer wird eine Benachrichtigung - Message Waiting Indication - an sein Festnetzendgerät gesendet. Der Dienstenutzer nimmt Kontakt mit dem Unified Messaging System auf, und der Inhalt der Nachricht des Short Message Service kann auf die folgenden Arten dem Dienstenutzer übermittelt werden:
   (1) Die Nachricht des Short Message Service wird mittels Text-Sprache-Umwandlung dem Dienstenutzer über dessen Festnetzendgerät vorgelesen.
   (2) Die Nachricht des Short Message Service wird als Faxnachricht an ein geeignetes Festnetzendgerät des Dienstenutzers gesendet.
   (3) Die Nachricht des Short Message Service wird als Email an die Email-Adresse des Dienstnutzers gesendet.
- Als weitere Variante kann durch das Unified Messaging System nach dem Eingang einer Nachricht des Short Message Service ein Anruf zum Dienstenutzer aufgebaut werden, wobei dem Dienstenutzer z.B. mittels einer Ansage mitgeteilt wird, daß eine Nachricht des Short Message Service eingegangen ist. Der Dienstenutzer kann anschließend, z.B. durch Sprachsteuerung oder durch Steuerung mit den Tasten seines Telefons, eine der genannten Methoden (1), (2) oder (3) auswählen, um den Inhalt der Nachricht des Short Message Service übermittelt zu bekommen.

Der Nutzer des SMS Koordinationsdienstes kann nun Nachrichten des Short Message Service, die an seine Festnetzrufnummer bzw. an die Nummer seines One Number Dienstes adressiert werden, empfangen, ohne ein mit Mitteln für den Empfang von Nachrichten des Short Message Service ausgestattetes Festnetzendgerät zu benötigen.

Die Erfindung ist nicht auf das Ausführungsbeispiel beschränkt. So kann beispielsweise das Unified Messaging System direkt in den SMS Koordinationsserver integriert werden oder umgekehrt, um beide Dienste zu einem einzigen Dienst zu verschmelzen und für den Dienstenutzer eine möglichst einfache Steuerbarkeit aller seiner Nachrichten - Nachrichten des Schort Message Service, Emails, Faxnachrichten, Sprachnachrichten - zu ermöglichen.

## Patentansprüche

1. Koordinationsdienst für den Short Message Service, demgemäß an ein Endgerät eines Kommunikationsnetzes adressierte Nachrichten des Short Message Service in Abhängigkeit von im Kommunikationsnetz hinterlegten Informationen an das Endgerät und/oder an mindestens ein weiteres dem Endgerät zugeordnetes Kommunikationsmittel weitergeleitet werden.

2. Koordinationsdienst nach Anspruch 1,
**dadurch gekennzeichnet,**
**daß** in einem Koordinationsserver für den Short Message Service dem Endgerät zugeordnete Informationen hinterlegt werden, wobei diese Informationen zumindest die Adresse des Endgerätes des Kommunikationsnetzes sowie Angaben darüber, ob Nachrichten des Short Message Service direkt an diese Adresse oder an das weitere Kommunikationsmittel bzw. die weiteren Kommunikationsmittel übermittelt werden sollen, umfassen.

3. Koordinationsdienst nach Anspruch 2,
**dadurch gekennzeichnet,**
**daß** die in dem Koordinationsserver hinterlegten Informationen zusätzlich die Adresse oder die Adressen des weiteren Kommunikationsmittels bzw. der weiteren Kommunikationsmittel enthalten.

4. Koordinationsdienst nach einem der Ansprüche 1 bis 3,
**dadurch gekennzeichnet,**
- **daß** das Kommunikationsnetz das Festnetz ist,
- **daß** das Endgerät ein analoges oder digitales Telefon zum Anschluß an das Festnetz oder ein mobiles Endgerät eines One Number Dienstes mit einheitlicher Rufnummer für Festnetz und Mobilfunknetz ist, wobei die Adresse des Endgerätes eine Festnetzrufnummer ist,
- **daß** das bzw. die weiteren Kommunikationsmittel ein Mobilfunkendgerät und/oder ein Internet-Datenendgerät und/oder ein eMail-Dienst und/oder ein Unified Messaging System ist bzw. sind.

5. Koordinationsdienst nach einem der Ansprüche 2 bis 4,
**dadurch gekennzeichnet,**
**daß** in dem Koordinationsserver nur für bestimmte oder für alle Endgeräte des Kommunikationsnetzes je ein Satz von Informationen hinterlegt wird.

6. Koordinationsserver für den Short Message Service, der an ein Endgerät eines Kommunikationsnetzes adressierte Nachrichten des Short Message Service in Abhängigkeit von hinterlegten Informationen an das Endgerät und/oder an mindestens ein weiteres dem Endgerät zugeordnetes Kommunikationsmittel weiterleitet.

7. Koordinationsserver nach Anspruch 6,
**dadurch gekennzeichnet,**
**daß** der Koordinationsserver für den Short Message Service dem Endgerät zugeordnete Informationen bereithält, wobei diese Informationen zumindest die Adresse des Endgerätes des Kommunikationsnetzes sowie Angaben darüber, ob Nachrichten des Short Message Service direkt an diese Adresse oder an das weitere Kommunikationsmittel bzw. die weiteren Kommunikationsmittel übermittelt werden sollen, umfassen.

8. Koordinationsserver nach Anspruch 7,
**dadurch gekennzeichnet,**
**daß** die hinterlegten Informationen zusätzlich die Adresse des weiteren Kommunikationsmittels bzw. der weiteren Kommunikationsmittel enthalten.

9. Koordinationsserver nach einem der Ansprüche 6 bis 8,
**dadurch gekennzeichnet,**
- **daß** der Koordinationsserver Teil des Signalisierungsnetzwerkes des Telefonnetzes ist,
- **daß** der Koordinationsserver Teil des Internets ist oder mittels einer zugeordneten Einrichtung mit dem Internet verbunden ist.

10. Koordinationsserver nach einem der Ansprüche 7 bis 9,
**dadurch gekennzeichnet,**
**daß** der Koordinationsserver Mittel zur Speicherung je eines Satzes von Informationen nur für bestimmte oder für alle Endgeräte des Kommunikationsnetzes vorhält.

11. Koordinationsserver nach einem der Ansprüche 6 bis 10,
**dadurch gekennzeichnet,**
**daß** der Koordinationsserver zusätzlich Mittel zur Bereitstellung von Unified Messaging Diensten vorhält.
